# EUROPEAN PATENT SPECIFICATION

(11) **EP 2 916 978 B1**
(45) Date of publication and mention of the grant of the patent: **07.11.2018**
(21) Application number: 13785597.9
(22) Date of filing: 04.09.2013
(51) Int. Cl.: B22D 19/02

(54) **METHOD FOR MANUFACTURING STEEL CASTS**
VERFAHREN ZUR HERSTELLUNG VON STAHLGUSSELEMENTEN
PROCÉDÉ POUR FABRIQUER DES PIÈCES COULÉES EN ACIER

(30) Priority: 14.09.2012 IT UD20120159
(43) Date of publication of application: 16.09.2015
(73) Proprietor: F.A.R. - Fonderie Acciaierie Roiale - SPA, 33010 Reana del Rojale (IT)
(72) Inventor: ANDREUSSI, Alberto, I-33019 Tricesimo (IT); ANDREUSSI, Primo, I-33010 Reana del Rojale (IT); PONTELLI, Eddy, I-33019 Tricesimo (IT); VENEROSO, Enrico, I-33100 Udine (IT)
(74) Representative: Petraz, Davide Luigi
(86) International application number: PCT/IB2013/001904
(87) International publication number: WO 2014/041409

(56) References cited:
- GB-A- 2 098 112
- US-A1- 2010 298 065

## Description

### FIELD OF THE INVENTION

The present invention concerns a method for manufacturing steel casts, advantageously but not exclusively of manganese steel, used to obtain wear elements, and casts thus manufactured.

The wear elements are usable in all the applications where a high resistance to wear is required, even under impulsive loads, such as crushers, mills, grinding members, turbo-machine components or earth moving machines.

### BACKGROUND OF THE INVENTION

It is known to manufacture, by casting, steel casts to obtain wear elements, used in a plurality of applications which require great resistance both to abrasion and to knocks. For example, such steels are used to make components for mills, crushers or safes, components for excavators or tracked means or turbo-machines etc..

In a preferential formulation the steels in question contain up to 1.5% carbon and up to 20% manganese, and have an austenitic structure that allows to combine great hardness with considerable toughness. These steels also have a good tendency for work-hardening and great ductility.

It is known to add elements that form complex carbides to these steels, in order to form manganese steel alloys that are more resistant to wear. Among these components the most commonly used is chromium which, as well as raising the yield point, induces the formation of chromium carbide in the austenitic matrix.

However, chromium carbides have the tendency to precipitate to the grain edge, making the structure fragile and reducing the toughness of the steel. A heat treatment is therefore necessary, typically a solubilization annealing followed by water quenching, which is carried out after the cooling of the steel has been completed. The annealing and subsequent rapid cooling allow to make the carbides migrate from the grain edge to the austenitic matrix.

For high chromium contents, annealing does not allow to obtain a complete solubilization of the carbides, and therefore it is intended to modify the form of the latter, so as to make them globular and therefore less inclined to form cracks. Furthermore, another function of annealing and quenching is to distribute the carbides present at the grain edge uniformly around the austenitic grain.

Although these known steels are the best for resistance to wear with regard to materials to be ground having considerable toughness and abrasiveness, they also have the disadvantage that they have low heat-conductivity. Indeed, this has limited their use to thicknesses of not more than about 100 mm, because in products of greater thicknesses the water quenching process entails the creation of internal tensions such as to cause cracks. In this way, if such thicknesses are obtained with steels containing manganese comprised between 12% and 20%, the properties of toughness that are typical of such steels are compromised.

It is also known that this limitation in the thicknesses can be overcome by introducing elements, such as for example titanium, able to give origin to hard compounds already in the liquid phase of the alloy. The hard compounds are rarely located at the grain edge, but remain uniformly distributed in the austenitic matrix, even after the solubilization treatment. The steel alloys that are obtained are therefore more resistant to abrasion and wear compared with steels containing chromium and without titanium, especially in the case of considerable thicknesses and particularly onerous conditions of use.

One disadvantage of steels containing titanium is that they confer greater resistance to wear on the whole section of an article, even though it is necessary to have a particular resistance only in those parts that are most stressed. This makes the article less workable and causes a considerable increase in the costs of working, due to the removal of chip.

Another disadvantage connected to the use of titanium and the manufacture of an article having uniformly optimum characteristics lies in the cost of said article, which is very high.

Methods are known, from GB-A-2098112 and GB-A-2003932, for manufacturing wear elements reinforced by high-resistance inserts having a heterogeneous structure defined by sintered particles in a metal matrix. The above methods provide to make the inserts by uniting carbides, for example tungsten or titanium carbides, in the form of powders or granules, to metal matrixes containing alloys of iron or cobalt using sintering techniques carried out at temperatures above the melting temperature of the alloys.

The melting of the alloys causes the carbides to be incorporated into the metal matrixes and possibly the sizes of the carbides to be reduced. Afterward, the inserts thus made are introduced into a mold and incorporated into the metal alloy that is cast onto them.

EP-B1-0554682 describes a method for manufacturing an element subject to wear in which one or more planar inserts, conformed as plates, sheets or discs, are obtained by incorporating powders of materials with high resistance to wear, in particular carbides, for example tungsten carbides, in a metal matrix. The reinforcement inserts described in EP-B1-0554682 can also include organic binders, plasticizers and hardening agents. The planar insert is subjected to high-temperature vacuum sintering and is then attached to a sand mold by means of pins or other anchoring elements made of the same material.

In the three documents cited above, sintering is carried out essentially at temperatures that come within the range of the melting temperature of the metal matrix, and lower than the melting temperatures of the carbides. In these documents, the purpose of sintering is essentially to determine an interface contact, or uniformly distributed, between the carbides and the matrix, in order to obtain reinforcement inserts consisting of a conglomerate of carbides immersed in the metal matrix.

The original carbides remain substantially unchanged, except for possible variations in size.

DE-A1-4214524 describes a method for manufacturing a wear-resistant cast that provides to insert into the mold, before casting, a reinforcement insert made with balls of hard material, in particular carbides, housed in seatings made in holed sheets of steel and held in position by the same holed sheets of steel.

WO-A1-2012/004654 describes a method for manufacturing elements subject to wear which provides to make reinforcement inserts to be incorporated in casts of melted steel. The reinforcement inserts comprise a porous support, like a sponge, impregnated with a liquid mixture consisting of a binder and metal powders containing hard elements, in particular carbides.

The use of sintering techniques as described in GB-A-2098112, GB-A-2003932 and EP-B1-0554682 has the disadvantage that they need long working times, enormous energy consumption and a consequent increase in the costs of manufacturing the final cast. This is due to the fact that, to make the inserts with these known techniques, preliminary operations are needed to prepare a mixture, or "green", to be sintered, and molds, in which the mixture is subjected to sintering.

Another disadvantage of these known methods is that they are not very flexible in terms of possible shapes of the inserts obtainable, since the shapes are limited to planar objects or with a simple conformation, also because of the molds as described above.

One disadvantage of all the known methods indicated above is connected to the micro-structural heterogeneity of the reinforcement inserts, and consists in the consequent discontinuity of the physical and mechanical properties, the distribution of which is not uniform.

Purpose of the present invention is to perfect a method that allows to obtain, by casting, casts of steel alloys, advantageously but not exclusively manganese steel, having throughout the toughness of manganese steel and, in localized zones, the hardness needed to resist stresses of wear and abrasion. In particular, the invention obtains steel casts that, throughout the localized zones, have a homogeneous micro-structure and a uniform distribution of the mechanical characteristics.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a method according to the present invention is used for manufacturing steel casts, in particular but not exclusively for manufacturing manganese steel casts intended to obtain wear elements.

The method comprises at least a step of making at least a reinforcement insert, a step of preparing a mold for the cast to be manufactured, and a subsequent step of casting the steel inside the mold.

According to one feature of the present invention, the reinforcement insert is made by compacting an amorphous mass of hardening powder in a desired geometric shape. The compacting is obtained by means of sintering techniques with a selective and localized melting comprising one or another of the techniques identified as EBM (Electron Beam Melting), SLM (Selective Laser Melting), or other similar or comparable techniques. The amorphous mass of hardening powder is obtained by mixing powders of pure elements, or of compounds that form carbides and/or micro-structures of great hardness, which due to the effect of the melting generate carbides and/or micro-structures of great hardness.

These techniques have the advantage that they allow to form almost any geometric shape, developed in three dimensions according to specific requirements.

The techniques described above allow to obtain complex shapes with variable geometries, starting directly from the amorphous mass of powder, because they are techniques of the adaptive type and obtain localized melting of the powder only in the zones affected by a high energy beam.

Thanks to the high energy intensity and the compacting to which the hardening powder is subjected, they also allow to obtain reinforcement inserts that are substantially without residual porosity and tensions.

Making reinforcement inserts with EBM or SLM techniques or similar also has the other advantage of obtaining a rapid and accurate process, and also allows to obtain reinforcement inserts starting from powders of high-melting materials, for example tungsten, titanium, molybdenum, advantageously usable pure or alloyed in iron alloys, which, after the chemical reactions that are triggered due to the effect of the type of melting, give rise to carbides or other hard micro-structures.

The method according to the present invention provides that the mold preparation step comprises a sub-step of positioning at least one reinforcement insert inside the mold. In order to allow a desired stable positioning of the reinforcement insert inside the mold, when the reinforcement insert is made, at least one appendix is also made in a piece therewith, with the function of anchoring the reinforcement insert to the mold.

According to a variant of the present invention, during the making of the reinforcement insert, through or blind or reciprocally intersecting channels are made, to promote the anchoring of the reinforcement insert to the steel cast during the casting step.

According to another feature of the invention, the sintering techniques melt the powders of pure elements, or compounds that form carbides and/or micro-structures of great hardness, triggering chemical reactions to generate carbides and/or micro-structures of great hardness, uniformly and homogeneously distributed inside the reinforcement insert and defining a homogeneous micro-structure of the latter.

The carbides make the reinforcement insert uniformly hard and resistant to wear, and suitable to confer these properties throughout the volume of the zones of the cast into which it is inserted.

The present invention also concerns a steel cast, in order to obtain a wear element, manufactured according to the method described above. The cast has overall a heterogeneous micro-structure and hardness, defined by at least one reinforcement insert integrated into the steel cast during the casting of the steel in a mold.

According to a characteristic feature of the cast, the reinforcement insert has a homogeneous micro-structure comprising carbides and/or structures of great hardness, and is obtained with sintering techniques with a selective and localized melting comprising one or the other of the following techniques: EBM (Electron Beam Molding), SLM (Selective Laser Melting), or other similar or comparable techniques.

The cast can comprise simple or mixed carbides, or complex aggregations of carbides. The carbides confer, uniformly in the zones where the insert is applied, hardness and resistance to wear on the cast that incorporates it, and consequently on the wear element that is made from it.

During the casting step, the reinforcement insert is partly melted, which advantageously allows an intimate welding with the cast steel, to confer on the cast obtained a homogeneous macro-structure.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of one form of embodiment of a method according to the present invention;
- fig. 2 is a variant of a detail of fig. 1;
- fig. 3 shows schematically a cast according to the present invention.

### DETAILED DESCRIPTION OF ONE FORM OF EMBODIMENT

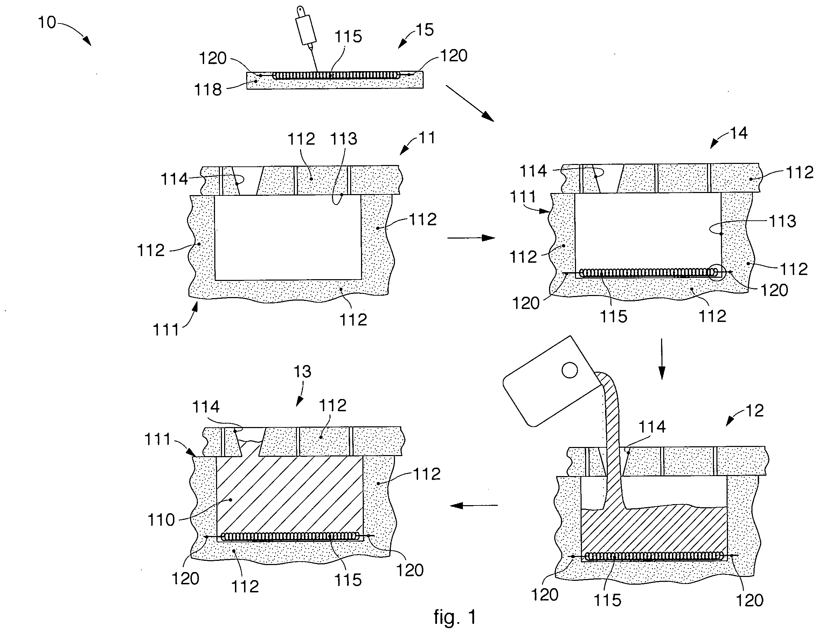

With reference to fig. 1, a method 10 for manufacturing steel casts 110, advantageously but not exclusively manganese steel, according to the present invention, allows to obtain casts 110 having a heterogeneous micro-structure.

The method 10 provides that in a preparation step 11 a mold 11 is made for every cast 110, that in a subsequent casting step 12 molten manganese steel is cast inside the mold 111 and that in a standby step the cast 110 solidifies.

During the preparation step 11, a plurality of perimeter walls 112 are made, in this case for example with olivine sand and binder additives, which delimit an internal cavity 113. An upper opening 114 puts the internal cavity 113 in communication with the outside of the mold 111 and allows the molten steel to enter into the internal cavity 113 during the casting step 12.

The preparation step 11 comprises a sub-step 14 of positioning at least one reinforcement insert 115 inside the internal cavity 113 of the mold 111.

A step 15 of making the reinforcement insert 115 (fig. 1) is performed prior to the step 11 of preparing the mold 111, and provides that the reinforcement insert 115 is made by sintering a hardening powder 118.

Sintering provides an initial compacting of the hardening powder 118, which is then at least partly melted using high density energy, and subsequently resolidified.

The hardening powder 118 is for example iron-based and also contains compounds containing chromium and/or titanium, or other elements similar to carbon, which, melting due to the high energy, can obtain alloys with simple or mixed carbides, or complex aggregations of carbides and/or micro-structures of great hardness.

The hardening powder 118 can be defined, for example, by a mixture of powders of pure elements, such as for example carbon, tungsten, chromium, iron, or powders of iron alloys containing said elements and others, such as for example titanium, molybdenum, boron or vanadium.

A first formulation of the present invention provides that, as well as iron-based powder, the hardening powder 118 comprises the following components:
- carbon in a percentage comprised between 2.5% and 3.5%;
- chromium in a percentage comprised between 20% and 30%;
to which can be added, depending on the other characteristics to be obtained, the following optional components:
- molybdenum in a percentage comprised between 0.1% and 1%;
- tungsten in a percentage comprised between 0.1% and 0.5%.

A second formulation of the present invention provides that, as well as iron-based powder, the hardening powder 118 comprises the following components:
- carbon in a percentage comprised between 0.5% and 1.0%;
- chromium in a percentage comprised between 10% and 15%;
to which can be added the following optional components:
- molybdenum in a percentage comprised between 0.1% and 1%;
- vanadium in a percentage comprised between 0.2% and 1.5%;
- boron in a percentage comprised between 0.001% and 0.015%.

According to a third formulation of the present invention, as well as iron-based powder, the hardening powder 118 comprises the following components:
- carbon in a percentage comprised between 0.3% and 0.5%;
- chromium in a percentage comprised between 4% and 5%;
- molybdenum in a percentage comprised between 0.5% and 1.5%.

Other formulations of the mixtures can be obtained as simple applications of the base lines indicated above.

The formulation of the hardening powder 118 can be established, according to specific requirements, by selecting on each occasion the powders of elements and/or compounds to be used, based on the carbides and/or micro-structures of great hardness that are to be obtained for the reinforcement insert 115.

The hardening powder 118 is treated in a sintering machine, in which the structure and geometric shape of the reinforcement insert 115 are defined, starting from the hardening powder 118.

To this purpose, sintering techniques with a selective and localized melting, such as for example EBM (Electron Beam Melting), or SLM (Selective Laser Melting), but also other techniques of the additive type, or other techniques similar or comparable to these, may be used.

Hereafter in the description, by way of example, we shall refer to EBM and SLM techniques, however the following considerations shall also apply to other similar techniques.

EBM or SLM techniques allow to obtain the desired reinforcement insert 115 with hardening powder 118, by the localized melting of specific areas of the latter, which is initially in the form of a mass of amorphous powder.

The high energy density reached with EBM or SLM techniques allows to melt and then sinter powders of high-melting materials, such as for example titanium, tungsten and molybdenum as above.

Following melting, the elements or compounds that make up the hardening powder 118 join together to make alloys. The compounds made due to the melting are the result of chemical reactions triggered by the high energy administered locally and which follow the laws of aggregation according to Gibbs' free energy. These compounds are essentially hard and made up of aggregations of carbides, simple or mixed, and/or micro-structures of great hardness, for example martensitic.

Since the EBM or SLM techniques allow to obtain carbides as indicated above, it is not necessary - and indeed it may even be disadvantageous - to use a hardening powder 118 containing already formed carbides.

The primary function of sintering by means of EBM or SLM is therefore to determine the micro-structure of the reinforcement insert 115, triggering chemical reactions starting from the base components.

This advantageously allows to obtain a hard micro-structure and at the same time homogeneous inside the whole reinforcement insert 115.

Obtaining the reinforcement insert 115 is controlled and managed by a control unit that cooperates with a melting device to obtain the desired geometric shapes.

The sintering techniques described above advantageously allow to make reinforcement inserts 115 of any geometric shape, developed in the three spatial dimensions according to the specific requirements of the cast 110 to be obtained. In fact, since they are additive techniques, they allow to obtain, quickly and precisely, quite complex and difficult three-dimensional geometrical developments that are even impossible to obtain using chip-removal operations, or by molding, or using traditional sintering techniques.

In fact, according to the invention, the reinforcement inserts 115 can have internal channels, intersecting or not, in which the melted steel can penetrate during the casting step 12, to create a better and more stable connection between the reinforcement insert 115 and molten steel.

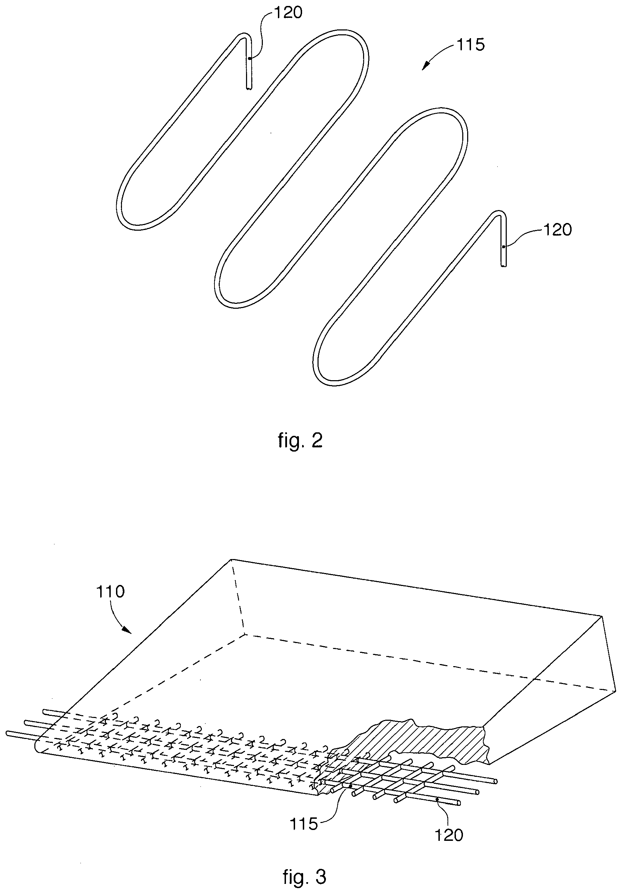

Fig. 2 shows, by way of example, a variant of the reinforcement insert 115, in this case shaped as a flat spiral.

Other spatial forms of reinforcement insert 115 can be made, according to the point-by-point requirements of the final product.

During the positioning sub-step 14 of the reinforcement insert 115, an anchoring operation is also carried out, during which it is anchored at least to one of the perimeter walls 112 of the mold 111. To this purpose, the reinforcement insert 115 comprises, at its ends, one or more appendixes 120, which function as anchoring means and which are inserted inside the corresponding perimeter walls 112.

This stratagem allows the reinforcement insert 115 to remain in the correct position also during the subsequent casting step 12, during which it is completely incorporated in the manganese steel matrix that is cast into the mold 111.

Fig. 3 shows an example of a cast 110 showing the incorporated position of the reinforcement insert 115.

By controlling the sintering process, the use of EBM or SLM techniques allows to obtain reinforcement inserts 115 which are not only micro-structurally homogeneous but also substantially without residual porosity and tensions, and therefore advantageously compact and resistant.

Furthermore, the reinforcement inserts 115 thus obtained do not need heat treatments after they have been made, and therefore can be put into the mold 111 immediately after sintering.

During the casting step 12, depending on the components, each reinforcement insert 115 can be subjected to partial melting which, during the subsequent solidification, allows to obtain a cast 110 that is macro-structurally homogeneous, due to the welding of the cast steel and the melted part of the reinforcement insert 115.

The cast 110 obtained maintains a generally heterogeneous micro-structure, which has a greater hardness in correspondence with the zones concerned with the reinforcement insert 115, which is uniformly distributed in them and constant, that is, without point-by-point variations.

The reinforcement insert 115 can be analyzed using microscopic analysis, whether optical or, better, electronic, by scanning or transmission.

Once the solidification of the cast 110 is terminated, after the stand-by step 13, subsequent heat treatments allow, for example by inducing martensitic transformations inside the cast 110, to confer more hardness on the zones that have the reinforcement inserts 115.

It is clear that modifications and/or additions of parts may be made to the method 10 and cast 110 as described heretofore, without departing from the field and scope of the present invention.

## Claims

1. Method for manufacturing steel casts (110), in particular but not exclusively manganese steel, intended to obtain a wear element, comprising at least a step (15) of making at least a reinforcement insert (115), a step (11) of preparing a mold (111) for the cast (110) to be manufactured, in which the reinforcement insert (115) is positioned, and a subsequent step (12) of casting the steel inside said mold, **characterized in that** said at least one reinforcement insert (115) is made by compacting in a desired geometric shape, by means of sintering techniques with a selective and localized melting of the EBM - Electron Beam Melting - type, or SLM - Selective Laser Melting -, an amorphous mass of hardening powder (118) obtained by mixing powders of pure elements, or of compounds that form carbides and/or micro-structures of great hardness which due to the effect of the melting generate carbides and/or micro-structures of great hardness.

2. Method as in claim 1, **characterized in that** said step (11) of preparing the mold (111) provides a sub-step (14) of precise positioning, inside said mold (111), of at least one reinforcement insert (115) having anchoring means (120) obtained in a single piece with the reinforcement insert (115) during said manufacturing step (15), said anchoring means (120) being able to allow a desired stable positioning of said reinforcement insert (115) inside said mold (111).

3. Method as in claim 1 or 2, **characterized in that** during the step (15) of making the reinforcement insert (115), through or blind or reciprocally intersecting channels are made, in order to promote the anchorage of said reinforcement insert (115) to the steel cast during said casting step (12).

4. Method as in any claim from 1 to 3, **characterized in that** said sintering techniques with a selective and localized melting melt said powders of pure elements, or of compounds that form carbides and/or micro-structures of great hardness present inside said hardening powder (118), said melting triggering chemical reactions to generate carbides and/or micro-structures of great hardness uniformly and homogeneously distributed inside said reinforcement insert (115) and defining a homogeneous micro-structure of said reinforcement insert (115).

5. Steel cast, in order to obtain a wear element, having overall a heterogeneous micro-structure and hardness, said micro-structure and said hardness being defined by at least a reinforcement insert (115) integrated into said steel cast during the casting of the steel into a mold (111), **characterized in that** said reinforcement insert (115) is obtained with sintering techniques with a selective and localized melting according to one or another of the techniques EBM - Electron Beam Molding -, or SLM - Selective Laser Melting -, of an amorphous mass of hardening powder (118) obtained by mixing powders of pure elements, or of compounds that form carbides and/or micro-structures of great hardness, and has a homogeneous micro-structure comprising carbides and/or structures of great hardness.

## Patentansprüche

1. Verfahren zur Herstellung von Stahl-Gussstücken (110), insbesondere, aber nicht ausschließlich, Manganstahl, vorgesehen zur Schaffung eines Verschleißelements, umfassend mindestens einen Schritt (15) zur Herstellung mindestens eines Verstärkungseinsatzes (115), einen Schritt (11) zur Vorbereitung einer Form (111) für das herzustellende Gussstück (110), in der der Verstärkungseinsatz (115) angeordnet ist, und einen nachfolgenden Schritt (12) zum Gießen des Stahls in die Form, **dadurch gekennzeichnet, dass** der mindestens eine Verstärkungseinsatz (115) durch Pressen in eine gewünschte geometrische Form mittels Sintertechniken mit einem selektiven und örtlich begrenzten Schmelzen des Typs EBM-Elektronenstrahlschmelzen - oder SLM - selektives Laserschmelzen einer amorphen Masse aus Härtepulver (118) hergestellt wird, das durch Mischen von Pulvern aus reinen Elementen, oder von Verbindungen, die Karbide und/oder Mikrostrukturen mit großer Härte bilden, die durch die Wirkung des Schmelzens Karbide und/oder Mikrostrukturen großer Härte erzeugen, hergestellt wird.

2. Verfahren nach Anspruch 1, **dadurch gekennzeichnet, dass** der Schritt (11) der Vorbereitung der Form (111) einen Unterschritt (14) der präzisen Positionierung mindestens eines Verstärkungseinsatzes (115), der Verankerungsmittel (120) aufweist, die während des Herstellungsschritts (15) in einem Stück mit dem Verstärkungseinsatz (115) geschaffen werden, innerhalb der Form (111) bereitstellt, wobei die Verankerungsmittel (120) dazu geeignet sind, ein gewünschtes stabiles Positionieren des Verstärkungseinsatzes (115) innerhalb der Form (111) zu erlauben.

3. Verfahren nach Anspruch 1 oder 2, **dadurch gekennzeichnet, dass** während des Schritts (15) der Herstellung des Verstärkungseinsatzes (115), Durchgangs- oder Blind- oder sich gegenseitig kreuzende Kanäle gebildet werden, um die Verankerung des Verstärkungseinsatzes (115) am Stahl-Gussstück während dem Schritt des Gießens (12) zu unterstützen.

4. Verfahren nach einem der Ansprüche 1 bis 3, **dadurch gekennzeichnet, dass** die Sintertechniken mit einem selektiven und örtlich begrenzten Schmelzen die Pulver aus reinen Elementen oder aus Karbide und/oder Mikrostrukturen großer Härte bildenden Verbindungen, die innerhalb des Härtepulvers (118) vorhanden sind, schmelzen, wobei das Schmelzen chemische Reaktionen zur Erzeugung von Karbiden und/oder Mikrostrukturen großer Härte auslöst, die gleichmäßig und homogen innerhalb des Verstärkungseinsatzes (115) verteilt sind, und eine homogene Mikrostruktur des Verstärkungseinsatzes (115) definiert.

5. Stahl-Gussstück zur Schaffung eines Verschleißelements, aufweisend eine insgesamt heterogene Mikrostruktur und Härte, wobei die Mikrostruktur und die Härte durch mindestes einen Verstärkungseinsatz (115), der während des Gießens des Stahls in eine Form (111) in das Stahl-Gussstück eingefügt wird, definiert sind, **dadurch gekennzeichnet, dass** der Verstärkungseinsatz (115) geschaffen wird mit Sintertechniken mit einem selektiven und örtlich begrenzten Schmelzen gemäß einer der Techniken EBM - Elektronenstrahlschmelzen - oder SLM - selektives Laserschmelzen einer amorphen Masse aus Härtepulver (118), das geschaffen wird durch Mischen von Pulvern reiner Elemente, oder von Karbide und/oder Mikrostrukturen großer Härte bildenden Verbindungen, eine homogene Mikrostruktur aufweist, die Karbide und/oder Strukturen großer Härte umfasst.

## Revendications

1. Procédé de fabrication de pièces coulées (110) en acier, en particulier mais non exclusivement en acier au manganèse, destiné à obtenir un élément d'usure, comprenant au moins une étape (15) de réalisation d'au moins un insert de renfort (115), une étape (11) de préparation d'un moule (111) pour la pièce coulée (110) à fabriquer, dans lequel l'insert de renfort (115) est positionné, et une étape subséquente (12) de coulée de l'acier à l'intérieur dudit moule, **caractérisée en ce que** ledit au moins un insert de renfort (115) est réalisé en compactant selon une forme géométrique désirée, au moyen de techniques de frittage avec fusion sélective et localisée du type EBM - Electron Beam Melting - ou SLM - Selective Laser Melting -, une masse amorphe de poudre (118) durcissable obtenue en mélangeant des poudres d'éléments purs, ou de composés formant des carbures et / ou des microstructures de grande dureté qui, du fait de la fusion, génèrent des carbures et / ou des microstructures de grande dureté.

2. Procédé selon la revendication 1, **caractérisé en ce que** ladite étape (11) de préparation du moule (111) inclut une sous-étape (14) de positionnement précis, à l'intérieur dudit moule (111), d'au moins un insert de renfort (115)) ayant des moyens d'ancrage (120) obtenus en une seule pièce avec l'insert de renfort (115) pendant ladite étape de fabrication (15), lesdits moyens d'ancrage (120) étant aptes à permettre un positionnement stable souhaité dudit insert de renfort (115) à l'intérieur dudit moule (111).

3. Procédé selon la revendication 1 ou la revendication 2, **caractérisé en ce que** lors de l'étape (15) de réalisation de l'insert de renfort (115), des canaux traversants ou aveugles ou s'entrecroisant sont pratiqués, afin de favoriser l'ancrage dudit insert de renfort (115) à la coulée d'acier pendant ladite étape de coulée (12).

4. Procédé selon l'une quelconque des revendications 1 à 3, **caractérisé en ce que** lesdites techniques de frittage avec une fusion sélective et localisée fondent lesdites poudres d'éléments purs, ou de composés formant des carbures et / ou des microstructures de grande dureté présentes à l'intérieur de ladite poudre durcissable (118), ladite fonte déclenchant des réactions chimiques pour générer des carbures et / ou des microstructures de grande dureté réparties uniformément et de façon homogène à l'intérieur dudit insert de renfort (115) et définissant une microstructure homogène dudit insert de renfort (115).

5. Pièce coulée en acier, pour obtenir un élément d'usure, présentant globalement une microstructure et une dureté hétérogènes, ladite microstructure et ladite dureté étant définies par au moins un insert de renfort (115) intégré dans ladite pièce coulée en acier lors de la coulée de l'acier dans un moule (111), **caractérisé en ce que** ledit insert de renfort (115) est obtenu par des techniques de frittage avec fusion sélective et localisée selon l'une ou l'autre des techniques EBM - Electron Beam Moulding, ou SLM - Selective Laser Melting -, d'une masse amorphe de poudre durcissable (118) obtenue en mélangeant des poudres d'éléments purs, ou des composés formant des carbures et / ou des microstructures de grande dureté, et présente une microstructure homogène comprenant des carbures et / ou des structures de grande dureté.
